# EUROPEAN PATENT SPECIFICATION

(11) **EP 1 837 148 B1**
(45) Date of publication and mention of the grant of the patent: **05.12.2012**
(21) Application number: 07005758.3
(22) Date of filing: 21.03.2007
(51) Int. Cl.: B29C 33/04

(54) **Mold with heat regulation ducts and its realization method**
Form mit Wärmeregulationsleitungen und Herstellungsverfahren dafür
Moule avec conduits de régulation de chaleur et son procédé de fabrication

(30) Priority: 24.03.2006 IT MI20060557
(43) Date of publication of application: 26.09.2007
(73) Proprietor: Persico S.p.A., 24027 Nembro (BG) (IT)
(72) Inventor: Rottigni, Andrea, 24022 Alzano Lombardo BG (IT)
(74) Representative: Locatelli, Massimo

(56) References cited:
- EP-A- 1 403 029
- EP-A- 1 612 022
- FR-A- 1 353 594
- GB-A- 829 374
- JP-A- 2 076 709
- JP-A- 6 008 251
- US-A- 3 191 225

## Description

This invention relates to a mold with heat-regulation ducts and to a method for its realization.

In the production of metallic molds which are to be heat regulated (heated and cooled) on the surface by different heating vectors (diathermic oil, water et cetera) there are at present some technical possibilities.

A first possibility in the case that the mold is made up of a metallic block is to realize drillings at a sufficient distance from the internal surface of the mold and connect the drillings with the external tubes.

But this procedure becomes particularly complex when the surface of the mold is curved or arranged on different levels often forcing compromises among many and costly drillings or drillings which are at different distances from the internal surface of the mold with resulting variations in the surface thermal yield. In addition, this technology does not lend itself to the realization of molds which must necessarily have reduced thicknesses such as, for example, rotating molds.

A second possibility is to realize the mold by melting by inserting in the casting the heat-regulation circuit realized with tubing in a more highly melting material than that of the mold. In this manner the heat-regulation circuit is 'co-melted' in the mold.

But this procedure has considerable problems. For example the positioning of the piping in the seat in which the metal of the mold will be melted is a delicate operation which can easily cause defects since the metal of the piping has an expansion coefficient different from the melting metal and can cause distortions in the mold or jeopardize solidification in the melted metal to create surface defects due to shrinkage, suction, porosity et cetera. In addition, in case of errors or necessity of changing, the intervention operation becomes much more complex and makes it necessary to intervene on two co-melted metals.

Lastly, the heat conductivity of the mold is reduced and in general conditioned by the presence of a piping system of material different from that of the mold.

A third known possibility is to realize the mold as a metallic shell going to screw onto the rear thereof another metallic shell which is often a welded sheet metal cover realizing an air space in which to cause the heat-regulation fluid to flow.

This latter solution however has disadvantages linked to the fact that the air space, especially in the presence of curved surfaces or on different planes, may have different depths in the various zones of the mold with resulting non-uniformity of heat exchange. The presence of a single air space also forces using considerable masses of fluid with decrease of outputs and considerable increase of the weight of the molds, which becomes particularly detrimental for some molding technologies among which, for example, rotary molding.

There being no bulkheads, there is no guarantee that the fluid circulates over all of the surface of the mold instead of following preferential circuits and thus generating different surface heat yields.

Lastly these molds over time often have problems of sealing between the surface shell and the cover.

US 3,191,225, EP-A-1 612 022 and GB 829, 374 disclose channels obtained in the thickness of the mold wall.

The general purpose of the present invention is to remedy the above mentioned shortcomings by making available a method for the realization of a mold with heat-regulation channels allowing obtaining a heat-regulated mold in a simple and effective manner without the disadvantages of the known art.

In view of this purpose it was sought to provide in accordance with the present invention a mold according to claim 1.

Again in accordance with this invention it was sought to realize a mold realization method according to claim 10.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a partially exploded diagrammatic perspective view of part of a mold realized in accordance with this invention,
FIG 2 shows shaped sheet metal parts used in the mold of FIG 1, and
FIG 3 shows a cross section view of a heat-regulation channel of the mold of FIG 1.

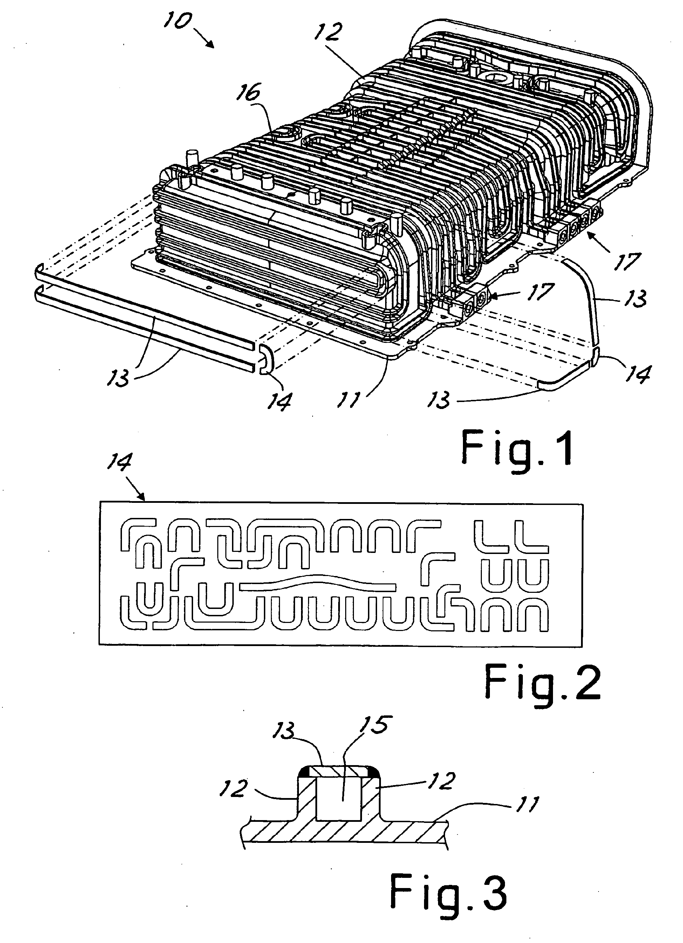

With reference to the figures, FIG 1 shows diagrammatically a mold designated as a whole by reference number 10 and advantageously for rotary molding realized in accordance with this invention.

The mold 10 includes a mold body 11 (with interior reproducing the shape to be got) on the external surface of which there are grooves 16 for forming channels open on the top. Advantageously the grooves are formed laterally by ribs 12 placed at an appropriate distance apart and projecting from the external surface of the mold to form the side surfaces of the channels.

The channel grooves or ribs can be obtained by mechanical removal of material or directly as melting of the mold body. This can also be done to conform to the technique of realization of the metal mold shell which as for the side walls of the heat-regulation system can be conveniently realized by mechanical processing from a metallic block or by melting. It can be of aluminum.

Each channel is closed in segments by metallic strips welded between the ribs. Advantageously the strips include straight sheet metal bands 13 in the straight sections (cut from a ribbon and possible bent) and from curves of sheet metal handlebar 14 (advantageously cut from a metal sheet), welded over the pairs of ribs which realize the channel sides. The channels end in unions 17 for connection of known means (not shown) for circulation of the heat-regulation fluids (heating and cooling). The material of the bands and curves of suitable thickness can be the same as the ribs. The unions between one strip segment and the other can also be obtained advantageously by welding.

FIG 2 shows as an example the cutting of all the sheet metal curves 14 necessary for realization of the channels of the mold of FIG 1.

FIG 3 shows as an example the section of a channeling (designated by 15) made up of side ribs 12 between which a band 13 is welded.

Advantageously the ribs have a height from the mold surface greater that the thickness (in particular at least double) and also have thickness which is less (in particular at least half) the distance between two ribs forming the walls of a same channel. This allows optimization of their efficiency in the heat exchange.

It is now clear how the preset purposes of this invention have been achieved by making available a channeled mold and a method for its realization.

The advantages obtained by applying this invention are for example the capability of realizing lighter molds than those obtained from the block by drilling and the capability of easily realizing any heat-regulation path even on complex surfaces while also ensuring a constant distance of the latter from the internal surface of the mold. In addition, thanks to the use of this invention, the mold and the heat-regulation circuit can by easily made of the same material with resulting advantages due to the homogeneousness of heat conduction. In a mold channeled in accordance with this invention there is better heat exchange between heat-regulation fluid and the metal of the mold. For example the heat conductivity of the mold is not reduced and, in general, is not conditioned by the presence of piping of material different from that of the mold as happens in known molds equipped with piping incorporated in the melting. There is also a considerable ease of intervention for modification, the mold and the heat-regulation system being realized of the same material and the surface of the channels being easily accessible.

Naturally the above description of an embodiment applying the innovative principles of the present invention is given by way of non-limiting example of said principles. For example, the mold and the channels could have another course than that shown as an example depending of the specific practical requirements.

## Claims

1. Mold including ducts designed to be run through by fluid for heat-regulation of the mold, the ducts being realized by grooves (16) open on the top towards the outside of the mold and closed along their extension by metallic strips (13, 14), the grooves (16) having side surfaces identified by pairs of ribs (12) on the top of which are fastened the metallic strips (13, 14), **characterized in that** said pairs of ribs (12) are projecting from the external surface of the mold.

2. Mold in accordance with claim 1, **characterized in that** the metallic strips (13, 14) are welded.

3. Mold in accordance with claim 1, **characterized in that** the strips are formed in segments along the extension of the ducts and **in that** the segments include sheet metal bands (13) cut from a ribbon and sheet metal curves (14) cut from a sheet.

4. Mold in accordance with claim 1, **characterized in that** the grooves (16) are made in melting from the mold body.

5. Mold in accordance with claim 1, **characterized in that** the grooves (16) are made by removal of material from the mold body.

6. Mold in accordance with claim 1, **characterized in that** the strips (13, 14) are of the same material as the external surface of the mold.

7. Mold in accordance with claim 1, **characterized in that** the height of the ribs (12) above the surface of the mold is greater than their thickness.

8. Mold in accordance with claim 1, **characterized in that** the thickness of the ribs (12) is less than the distance between two ribs (12) forming the walls of a same duct.

9. Mold in accordance with claim 1, **characterized in that** the grooves (16) end in unions (17) for connection to a fluid supply.

10. Method for realization of a mold with ducts designed to be traveled by fluid for heat-regulation of the mold, including the steps of realizing on the external surface of the mold pairs of ribs projecting from the external surface of the mold, forming side surfaces of a plurality of channels open on the top towards the outside of the mold, and then fastening on the top of said ribs, along their extension, metallic strips to constitute upper closing of the channel to form a duct.

11. Method in accordance with claim 10, in which the metallic strips are fastened by welding.

12. Method in accordance with claim 10, in which the strips are formed as segments along the extension of the channels and the segments include sheet metal bands which are cut from a ribbon and sheet metal curves which are cut from a sheet.

13. Method in accordance with claim 10, in which the channels are made in melting from the mold body.

14. Method in accordance with claim 10, in which the channels are made by removal of material from the mold body.

## Patentansprüche

1. Form, die Leitungen umfasst, die dazu gestaltet sind, von einem Fluid für die Wärmeregulierung der Form durchflossen zu werden, wobei die Leitungen durch Nuten (16) realisiert sind, die auf der Oberseite zur Außenseite der Form offen sind und entlang ihrer Ausdehnung durch Metallstreifen (13, 14) verschlossen werden, wobei die Nuten (16) Seitenflächen aufweisen, die durch Rippenpaare (12) definiert sind, auf deren Oberseite die Metallstreifen (13, 14) befestigt sind, **dadurch gekennzeichnet, dass** diese Rippenpaare (12) von der Außenfläche der Form abstehen.

2. Form nach Anspruch 1, **dadurch gekennzeichnet, dass** die Metallstreifen (13, 14) angeschweißt sind.

3. Form nach Anspruch 1, **dadurch gekennzeichnet, dass** die Streifen in Segmenten entlang der Ausdehnung der Leitungen ausgebildet sind, und dass die Segmente von einem Band abgeschnittene Blechbänder (13) und aus einem Blech ausgeschnittene Blechbogenstücke (14) umfassen.

4. Form nach Anspruch 1, **dadurch gekennzeichnet, dass** die Nuten (16) beim Schmelzen aus dem Formkörper hergestellt sind.

5. Form nach Anspruch 1, **dadurch gekennzeichnet, dass** die Nuten (16) durch Abtragen von Material vom Formkörper hergestellt sind.

6. Form nach Anspruch 1, **dadurch gekennzeichnet, dass** die Streifen (13, 14) aus dem gleichen Material wie die Außenfläche der Form sind.

7. Form nach Anspruch 1, **dadurch gekennzeichnet, dass** die Höhe der Rippen (12) auf der Oberfläche der Form größer als ihre Dicke ist.

8. Form nach Anspruch 1, **dadurch gekennzeichnet, dass** die Dicke der Rippen (12) kleiner als der Abstand zwischen zwei Rippen (12) ist, die die Wände einer selben Leitung bilden.

9. Form nach Anspruch 1, **dadurch gekennzeichnet, dass** die Nuten (16) mit Verbindungen (17) für den Anschluss an eine Fluidversorgung enden.

10. Verfahren zum Herstellen einer Form mit Leitungen, die dazu gestaltet sind, von einem Fluid für die Wärmeregulierung der Form durchflossen zu werden, das die Schritte des Herstellens auf der Außenfläche der Form von Rippenpaaren, die von der Außenfläche der Form abstehen, des Ausbildens von Seitenflächen von einer Vielzahl von Kanälen, die auf der Oberseite zur Außenseite der Form offen sind, und des anschließenden Befestigens auf der Oberseite dieser Rippen entlang ihrer Ausdehnung von Metallstreifen zum Bilden eines oberen Verschlusses des Kanals zum Ausbilden einer Leitung umfasst.

11. Verfahren nach Anspruch 10, bei dem die Metallstreifen durch Schweißen befestigt werden.

12. Verfahren nach Anspruch 10, bei dem die Streifen als Segmente entlang der Ausdehnung der Kanäle ausgebildet werden und die Segmente von einem Band abgeschnittene Blechbänder und aus einem Blech ausgeschnittene Blechbogenstücke umfassen.

13. Verfahren nach Anspruch 10, bei dem die Kanäle beim Schmelzen aus dem Formkörper hergestellt werden.

14. Verfahren nach Anspruch 10, bei dem die Kanäle durch Abtragen von Material vom Formkörper hergestellt werden.

## Revendications

1. Moule comprenant des conduits conçus pour être parcourus par un fluide pour la régulation thermique du moule, les conduits étant réalisés par des rainures (16) ouvertes au sommet vers l'extérieur du moule et fermées le long de leur extension par des bandes métalliques (13, 14), les rainures (16) ayant des surfaces latérales identifiées par des paires de nervures (12) sur le sommet desquelles sont fixées les bandes métalliques (13, 14), **caractérisé en ce que** lesdites paires de nervures (12) sont en saillie par rapport à la surface extérieure du moule.

2. Moule selon la revendication 1, **caractérisé en ce que** les bandes métalliques (13, 14) sont soudées.

3. Moule selon la revendication 1, **caractérisé en ce que** les bandes sont formées en segments suivant l'extension des conduits et **en ce que** les segments comprennent des bandes de tôle métallique (13) découpées à partir d'un ruban et des courbes de tôle métallique (14) découpées à partir d'une tôle.

4. Moule selon la revendication 1, **caractérisé en ce que** les rainures (16) sont réalisées par fusion à partir du corps du moule.

5. Moule selon la revendication 1, **caractérisé en ce que** les rainures (16) sont réalisées par enlèvement de matériau du corps du moule.

6. Moule selon la revendication 1, **caractérisé en ce que** les bandes (13, 14) sont du même matériau que la surface extérieure du moule.

7. Moule selon la revendication 1, **caractérisé en ce que** la hauteur des nervures (12) au-dessus de la surface du moule est plus grande que leur épaisseur.

8. Moule selon la revendication 1, **caractérisé en ce que** l'épaisseur des nervures (12) est inférieure à la distance entre deux nervures (12) formant les parois d'un même conduit.

9. Moule selon la revendication 1, **caractérisé en ce que** les rainures (16) se terminent en raccords (17) pour le raccordement à une alimentation de fluide.

10. Procédé pour la réalisation d'un moule avec des conduits conçus pour être parcourus par un fluide pour la régulation thermique du moule, comprenant les étapes consistant à réaliser sur la surface extérieure du moule des paires de nervures de moule faisant saillie par rapport à la surface extérieure du moule, former des surfaces latérales d'une pluralité de canaux ouverts au sommet vers l'extérieur du moule, et fixer ensuite sur le sommet desdites nervures, suivant leur extension, des bandes métalliques pour constituer une fermeture supérieure du canal pour former un conduit.

11. Procédé selon la revendication 10, dans lequel les bandes métalliques sont fixées par soudage.

12. Procédé selon la revendication 10, dans lequel les bandes sont formées comme des segments suivant l'extension des canaux et les segments comprennent des bandes de tôle métallique qui sont découpées à partir d'un ruban et des courbes de tôle métallique qui sont découpées à partir d'une tôle.

13. Procédé selon la revendication 10, dans lequel les canaux sont réalisés par fusion à partir du corps du moule.

14. Procédé selon la revendication 10, dans lequel les canaux sont réalisés par enlèvement de matériau du corps du moule.
